(19) Europäisches Patentamt
European Patent Office
Office européen des brevets

(11) Veröffentlichungsnummer: **0 193 102**
**B1**

(12) # EUROPÄISCHE PATENTSCHRIFT

(45) Veröffentlichungstag der Patentschrift: **20.06.90**

(21) Anmeldenummer: **86102165.7**

(22) Anmeldetag: **19.02.86**

(51) Int. Cl.$^5$: **C 09 D 5/44,** C 08 G 59/50, C 08 G 59/14

(54) **Verfahren zur Herstellung kathodisch abscheidbarer Lackbindemittel.**

(30) Priorität: **26.02.85 AT 564/85**

(43) Veröffentlichungstag der Anmeldung:
**03.09.86 Patentblatt 86/36**

(45) Bekanntmachung des Hinweises auf die Patenterteilung:
**20.06.90 Patentblatt 90/25**

(84) Benannte Vertragsstaaten:
**CH DE FR GB IT LI SE**

(56) Entgegenhaltungen:
**EP-A-0 074 634**
**US-A-4 225 478**

(73) Patentinhaber: **Vianova Kunstharz Aktiengesellschaft**
**A-8402 Werndorf (AT)**

(72) Erfinder: **Daimer, Wolfgang, Dipl.-Ing.**
**Rosenberggürtel 37**
**A-8010 Graz (AT)**
Erfinder: **Schipfer, Rudolf, Dr.**
**Ernst Haeckelstrasse 53**
**A-8010 Graz (AT)**
Erfinder: **Monschein, Günther**
**Grünäckerweg 4**
**A-8401 Kalsdorf (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 193 102 B1

**Beschreibung**

Die Erfindung betrifft ein Verfahren zur Herstellung kathodisch abscheidbarer Lackbindemittel auf der Basis von modifizierten Epoxid-Amin -Addukten.

Das Verfahren der Elektrotauchlackierung verlangt von den dafür geeigneten Bindemitteln in den verschiedenen Stufen des Verfahrens ein gegenläufiges Verhalten.

So sollen die zur Verarbeitung gelangenden Bindemittel oder Bindemittelkomponenten auch bei geringeren Anteilen von organischen Lösemitteln eine niedrige Viskosität aufweisen, um eine leichte Pigmentierbarkeit und gute Verarbeitung zu Elektrotauchlacken mit niedrigem Lösemittelgehalt zu ermöglichen. Andererseits ist ein ausreichend hohes Molekulargewicht und damit eine hohe Viskosität eine Vorraussetzung für die verlangten Beständigkeitseigenschaften der eingebrannten Filme.

Ein ähnlicher Widerspruch besteht im Wunsch nach einer guten Löslichkeit bzw. Dispergierbarkeit der Bindemittel in Wasser als dem wesentlichen Trägermedium beim ET-Verfahren und der Ausbildung eines möglichst hydrophoben Films nach der Deprotonisierung bei der Abscheidung bzw. nach der Vernetzung.

Ähnlich gegensätzliche Forderungen bestehen hinsichtlich der Ausbildung eines hohen elektrischen Filmwiderstandes bei der Abscheidung zur Erzielung eines hohen Umgriffs und dem gleichzeitigen Wunsch nach hohen Filmschichtstärken, die nur bei geringerem elektrischen Filmwiderstand erhalten werden können.

Aus der Literatur sind viele Versuche bekannt, einen Kompromiß zwischen der optimalen Löslichkeit bzw. Dispergierbarkeit der protonisierten Bindemittel und ihrer Abscheidungscharakteristik bzw. den Eigenschaften der vernetzten Lackfilme durch mannigfache Modifizierung von Bisphenol A- oder Phenolnovolak-Epoxidharz-Amin-addukten zu finden.

So wird beispielsweise in der US—A—41 04 147 oder der US—A—41 48 772 das Epoxidharz auf Basis von Bisphenol A vor der Umsetzung mit dem Amin mit einem Polytetramethylenglykol unter Kettenverlängerung reagiert und damit ein hydrophiles Segment eingebaut. Auch in der US—A—38 39 252 oder der US—A—40 35 275 wird eine solche Kettenverlängerung mit Polypropylenglykol vor der Umsetzung mit dem Amin vorgeschlagen. Ein anderer Weg zur Einführung von Polyalkylenglykolsegmenten besteht gemäß EP—A2—00 74 634 in der Kettenverlängerung bei niedrigmolekularen Bisphenol-A-Epoxidharzen mit Bisphenol-A-Ethylenoxid-Addukten.

Ein wesentlicher Nachteil dieser Methoden liegt in der mangelhaften Kontrollierbarkeit solcher kettenverlängernden Reaktionen, da dabei auch Eigenkondensationen des Epoxidharzes nicht auszuschließen sind. Auch wenn die Vorprodukte den theoretischen Epoxidwert aufweisen, ist das Vorhandensein freier Polyglykole nicht auszuschließen, was zu einer wesentlichen Beeinflussung verschiedenster Bindemitteleigenschaften führt.

Als extrem gut wasserlöslich erweisen sich protonisierte Epoxid-Amin-Addukte auf Basis von Polyoxyalkylenglycidylethern, wie sie beispielsweise in der US—A—40 35 275 angeführt sind. Diese Produkte sind jedoch nur schwierig in Form brauchbarer Filme elektrisch abzuscheiden und zeigen auch hinsichtlich ihrer Beständigkeitseingenschaften erwartungsgemäß große Mängel.

Bei pH-Werten über 7 in Wasser lösliche, kationisch modifizierte Epoxidharze können durch Einbau von quaternären Ammoniumgruppen, d.h. durch Reaktion der Epoxidgruppen mit tertiären Aminen in Gegenwart von Säuren und/oder Wasser, erhalten werden. Produkte dieser Art, wie sie beispielsweise in der US—A—40 35 275 beschrieben sind, haben sich in der Praxis nur bei Vorliegen niederer Ansprüche als Alleinbindemittel für geeignet erwiesen und werden gegebenenfalls als Zusatzbindemittel eingesetzt.

Es wurde nun gefunden, daß der Einbau von Polyoxyalkylensegmenten in Bindemittel auf Epoxid-Amin-Addukt-Basis in einfacher und leicht kontrollierbarer Weise durch nachträgliche Umsetzung der Epoxid-Amin-Addukte mit Polyoxyalkylenglycidylethern möglich ist.

Die vorliegende Anmeldung betrifft dementsprechend ein Verfahren zur Herstellung von nach Protonierung wasserverdünnbaren, kathodisch abscheidbaren Bindemitteln auf der Basis von polyoxyalkylenmodifizierten Epoxidharz-Amin-Addukten, welches dadurch gekennzeichnet ist, daß man Aminaddukte von Polyglycidylethern von Polyphenolen, wobei die Addukte eine ausschließlich von tertiären Aminogruppen stammende Aminzahl zwischen 30 und 130 mg KOH/g, primäre Hydroxylgruppen in einer Menge entsprechend einer Hydroxylzahl von 20 bis 200 mg KOH/g und ein mittleres Molekulargewicht von 1000 bis 20.000 aufweisen, bei 60 bis 150°C mit 0,5 bis 20 Gew.-% Polyoxy[($C_2$—$C_5$)-alkylen]glycidylethern, deren anteilige Polyglykole ein Molekulargewicht zwischen 300 und 850 haben, bis zu einem Epoxidwert von praktisch 0 umsetzt.

Es hat sich gezeigt, daß sich durch diese Methode des Einbaus von hydrophilen Segmenten die Löslichkeit des partiell protonisierten Polymeren wesentlich verbessern läßt, ohne daß die bei den Produkten des Standes der Technik zu beobachtenden Nachteile auftreten.

Der stärker hydrophile Charakter der Polymeren gestattet eine Herabsetzung des für die Badstabilität notwendigen Neutralisationsgrades, wodurch wiederum das Abschiedungsäquivalent (mg/Cb) und der Umgriff positiv beeinflußt werden.

Obwohl der Reaktionsmechanismus derzeit noch nicht völlig geklärt ist, ist die Reaktion durch die Verfolgung der Abnahme des Glycidylgruppengehaltes einwandfrei kontrollierbar. Die Bildung von extrem wasserlöslichen Störsubstanzen, z.B. durch Reaktion der Polyoxyalkylenglycidylether mit freien niedrigmolekularen sekundären oder primären Aminen ist praktisch ausgeschlossen. Ebenso konnte ein negativer

Einfluß auf die Beständigkeitseigenschaften der vernetzten Filme aus Lacken auf Basis der erfindungsgemäß hergestellten Bindemittel nicht beobachtet werden.

Die für die Herstellung der Aminaddukte verwendbaren Polyglycidylether von Phenolen sind aus der Literatur bekannt und im Handel in einer breiten Palette erhältlich. Beispiele für solche Polyphenole, welche mit einem Epihalohydrin in die entsprechenden Polyglycidylether umgesetzt werden, sind die Bis(4-hydroxyphenyl-)-2,2-alkane, wobei der Alkanrest ein Ethan-, Propan- oder ein Butanrest sein kann. Andere Polyphenole sind z.B. das 4,4'-Dihydroxybenzophenon, 1,5-Dihydroxynaphthalin oder Phenolnovolake. Vorzugsweise werden die Diglycidylether von Bisphenol A bzw. die Polyglycidylether von Phenolnovolaken eingesetzt. Für die erfindungsgemäß hergestellten Produkte sind insbesonders Glycidylether mit einem Epoxidäquivalentgewicht von 170 bis etwa 1000 geeignet.

Die Glycidylether können gegebenenfalls vor der Reaktion mit den Aminen teilweise durch andere epoxidreaktive Verbindungen defunktionalisiert werden. Dies kann beispielsweise durch Monocarboxylverbindungen wie Monocarbonsäuren verschiedener Kettenlänge oder Monoestern von Dicarbonsäuren, jedoch vorteilhafterweise auch durch längerkettige Dicarbonsäuren, wie Adipinsäure und deren höhere Homologe sowie dimerisierte Fettsäuren u.ä. erfolgen. In geringem Umfang können zu diesem Zweck auch Polycarboxylverbindungen wie maleinisierte Öle oder Polydiene herangezogen werden. Besonders bevorzugt ist eine teilweise Defunktionalisierung mit Carboxylgruppen tragenden Polyestern, die gegebenenfalls auch mit Fettsäuren modifiziert sein können. Diese Polyester bzw. Alkydharze werden vorzugsweise so formuliert, daß sie noch freie primäre Hydroxylgruppen aufweisen.

Als Amine zur Herstellung der Aminaddukte werden primäre oder sekundäre Alkylamine oder die entsprechenden Mono- oder Dialkanolamine sowie primär-tertiäre oder sekundär-sekundäre Diamine eingesetzt. Die einzelnen Vertreter dieser Gruppe sind dem Fachmann bekannt und brauchen daher nicht im einzelnen aufgezählt zu werden. Neben den einfachen niedermolekularen Aminen können gegebenenfalls auch höhermolekulare Amine ganz oder anteilig eingesetzt werden. Soferne die Amine noch andere funktionelle Gruppen aufweisen, dürfen diese unter den gewählten Reaktionsbedingungen nicht mit den Epoxidgruppen reagieren. Beispielsweise können die Amine auch Säureamidgruppen enthalten.

Die Menge der Amine und der Epoxidharzmodifikatoren wird so gewählt, daß ein epoxidgruppenfreies und ausschließlich tertiäre Aminogruppen enthaltendes Addukt entsteht, welches eine Aminzahl zwischen 30 und 120 mg KOH/g und primäre Hydroxylgruppen in einer Menge entsprechend einer Hydroxylzahl von 20 bis 200 mg KOH/g aufweist. Das Molekulargewicht der erfindungsgemäß eingesetzten, gegebenenfalls modifizierten, Aminaddukte liegt zwischen 1000 und 20.000.

Die Herstellung der Aminaddukte erfolgt in bekannter Weise, wobei eventuelle Modifikationen der Epoxidharze vor der Aminreaktion erfolgen. Üblicherweise sollen durch die Modifikatoren nicht mehr als 50 Mol% der Epoxidgruppen defunktionalisiert werden. Die Reaktionen werden bei 90 bis 140°C, vorteilhafterweise in einem reaktionsinertem Lösemittel durchgeführt. Als Lösemittel dienen dabei Glykolmono- oder -diether, wie Ethylenglykolmonoethylether, Ethylenglykolmonobutylether, Propylenglykolmonoethylether, Diethylenglykoldiethylether, Dipropylenglykolmonomethylether oder Ketone wie Methylisobutylketon, Methylethylketon oder Cyclohexanon bzw. aromatische Kohlenwasserstofflösemittel, wie Toluol oder Xylol.

Die Aminaddukte werden in einer weiteren Reaktionsstufe bei 60 bis 150°C mit 5 bis 20 Gew.-% eines Polyoxyalkylenglycidylethers, bezogen auf das Gewicht des Epoxidharz/Aminadduktes, bis zu einem Epoxidwert von praktisch 0 umgesetzt.

Als Polyoxyalkylenglycidylether werden die Mono- oder Diglycidylether der Poly(oxyethylen)glykole, Poly(oxypropylen)glykole, Poly(oxytetramethylen)glykole mit Molekulargewichten zwischen 300 und 850 eingesetzt. Bevorzugt werden Poly(oxyethylen)glykoldiglycidylether und Poly(oxypropylen)glykoldiglycidylether aus Polyglykolen mit einem Molekulargewicht zwischen 350 und 750 verwendet. Besonders bevorzugt sind Verbindungen der allgemeinen Formel

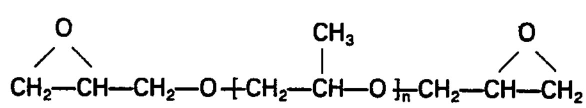

wobei der Wert n zwischen 2 und 12 liegt.

Im Anschluß an die Reaktion kann gegebenenfalls das organische Lösemittel unter Vakuum anteilig entfernt werden. Diese Verfahrensstufe kann gegebenenfalls auch nach der partiellen Neutralisation des Ansatzes und Verdünnen mit Wasser erfolgen. Bei diesen Verfahrensvarianten können Materialien erhalten werden, welche nur geringe Anteile an organischen Lösemitteln enthalten und damit auch strengen Umweltvorschriften entsprechen (z.B. Low-VOC-Regulations).

Zur Neutralisation werden für die nach dem erfindungsgemäßen Verfahren hergestellten Produkte Säuremengen von 10 bis 40 Millimol pro 100 g Bindemittel (Festharz) benötigt, um eine für die Praxis der Elektrotauchlackierung geeignete stabile und sedimentationsfreie wäßrige Lösung oder Emulsion zu erhalten.

Vergleichsweise werden für die polyalkylenglykoletherfreien Aminaddukte gleichen Aufbaus, trotz des relativ niedrigeren Molekulargewichts bzw. der höheren Aminzahl 40 bis 100 mMol/100 g Festharz an Neutralisationsmittel zur Herstellung eines praxisgerecht verdünnbaren Badmaterials benötigt.

Die Herstelung des Badmaterials für die Elektrotauchlackierung, die Pigmentierung, der Neutralisations- und Verdünnungsvorgang sind im übrigen dem Fachmann bekannt und bedürfen keiner näheren Beschreibung. Das gleiche gilt auch für die Beschichtung und die Härtung der abgeschiedenen Filme.

Die nach dem erfindungsgemäßen Verfahren hergestellten Bindemittel werden in Kombination mit Vernetzungsmitteln verarbeitet. Dazu können Härtungskomponenten, die durch Umesterungsreaktionen zur Vernetzung führen und die beispielsweise in der EP—B1—00 12 463, DE—A1—33 15 469 oder der AT—PS—372 099 beschreiben sind, eingesetzt werden. Ebenso kann auch eine Vernetzung durch blockierte Isocyanate oder Aminoharze, gegebenenfalls unter Verwendung entsprechender Katalysatoren zur Härtung herangezogen werden. Die Einbrenntemperaturen liegen je nach dem eingesetzten Härtungssystem zwischen 140 und 190°C.

Aufgrund ihrer Eigenschaften kommen die erfindungsgemäßen Produkte in der Großserienlackierung, z.B. in der Automobilindustrie, wo wegen der Größe der Anlagen eine gute Verarbeitbarkeit bei niedrigem Neutralisationsgrad von Bedeutung ist, zum Einsatz.

Die folgenden Beispiele erläutern die Erfindung, ohne ihren Umfang zu beschränken. Alle Angaben in Teilen oder Prozenten beziehen sich, soweit nichts anderes angegeben wird, auf Gewichtseinheiten.

In den Beispielen werden die folgenden Abkürzungen verwendet:

| | |
|---|---|
| EPH | Epoxidharz |
| I | Basis:Phenolnovolak (EEW: 170) |
| II | Basis:Bisphenol A (EEW: 180) |
| III | Basis:Bisphenol A (EEW: 475) |
| IV | Basis:Bisphenol A (EEW: 920) |
| EEW | Epoxyäquivalentgewicht |
| LM | bei der Reaktion eingesetztes Lösemittel |
| PM | Propylenglykolmonomethylether |
| EGL | Ethylenglykolmonoethylether |
| BGL | Ethylenglykolmonobutylether |
| MBK | Methylisobutylketon |
| MOD | carboxylfunktioneller Modifikator |
| M 1 | Polyester aus 3 Mol Trimethylolpropan, 2 Mol Adipinsäure, 1 Mol Isononansäure und 1 Mol Tetrahydrophthalsäureanhydrid (Säurezahl:65 mg KOH/g; Carboxyläquivalentgewicht 942 g) |
| M 2 | Adipinsäure (Carboxyläquivalentgewicht: 73 g) |
| M 3 | Gemisch polymerisierter Fettsäuren (80% Dimer FS, 20% Trimer FS, z.B. PRIPOL 1022) Carboxyläquivalentgewicht: 293 g |

| | |
|---|---|
| Amine | |
| MONAM | $HO—CH_2—CH_2—NH—CH_2—CH_2—NH—CO—CH_2—OH$ (erhalten durch Umsetzung von Aminoethylethanolamin mit Glykolsäurebutylester) |
| EOLA | Monoethanolamin |
| MEOLA | N-Methyl-ethanolamin |
| DOLA | N,N-Diethanolamin |
| DPA | N,N-Di-n-propanolamin |
| EHA | 2-Ethylhexylamin |
| ADP | 1-Diethylamino-4-aminopentan |
| DPA | N,N-Dibutylamin |
| DMAPA | N,N-Dimethylaminopropylamin |
| DEAPA | N,N-Diethylaminopropylamin |

| | |
|---|---|
| POAG: | Polyoxyalkylenglycidylether |
| PEGG | Polyethylenglykoldiglycidylether (Molgew. ca. 620) |
| PPGG | Polypropylenglykoldiglycidylether (Molgew. ca. 400) |
| PBGG | Polytetramethylenglykoldiglycidylether (Molgew. ca. 750) |

### Beispiele 1 bis 8

In einem geeigneten Reaktionsgefäß wird das Epoxidharz (EPH) mit dem carboxylfunktionellen Modifikator (MOD) in Gegenwart des Lösemittels (LM) bei einem Festkörpergehalt von 85% bei 110°C bis zu einer Säurezahl von weniger als 0,5 mg KOH/g umgesetzt. Nach Verdünnen des Ansatzes mit weiterem

Lösemittel auf einen Festkörpergehalt von 70% erfolgt bei 60°C innerhalb von 2 Stunden die Zugabe einer Mischung der Amine mit der gleichen Menge des Lösemittels. Anschließend wird die Reaktion bei 70 bis 90°C bis zum Erreichen der theoretisch berechneten Epoxidzahl weitergeführt. Dann wird bei 90°C der Polyoxyalkylenglykolglycidylether zugegeben und die Reaktion bei 120°C bis zum Verbrauch aller Glycidylgruppen geführt. Das Reaktionsprodukt wird mit dem Lösemittel auf einen Festkörpergehalt von 70% eingestellt. Die Mengenverhältnisse und die Art der Ausgangsmaterialien sind in der Tabelle 1 zusammengefaßt. Die Beispiele 1 (V) und 4 (V) sind Vergleichsbeispiele.

Die Kennzahlen für die gemäß Beispiel 1—8 hergestellten Produkte sind in der Tabelle 2 zusammengefaßt.

TABELLE 1

| Beispiel | EPH Tle (Val) Typ | LM | MOD Tle (COOH-Val) Typ | AMIN Tle (Val) Typ | POAG Tle (%) Typ |
|---|---|---|---|---|---|
| 1 (V) | 1627 (3,43) III | PM | 226 (0,24) M1 | 94,5 (0,9) DOLA<br>67,5 (0,9) MEOLA<br>78 (1,2) DEAPA | — |
| 2 | ——wie | Beispiel 1—— | | | 115 (5) PPGG |
| 3 | ——wie | Beispiel 1—— | | | 233 (10) PPGG |
| 4 (V) | ——wie | Beispiel 1 | | 146 (0,9) MONAM<br>67,5 (0,9) MEOLA<br>78 (1,2) DEAPA | — |
| 5 | ——wie | Beispiel 2—— | | | 115 (5) PPGG |
| 6 | ——wie | Beispiel 2—— | | | 238 (10) PPGG |
| 7 | 360 (2,0) II<br>1306 (1,42) IV | MBK<br>EGL 29 (0,4) | M 2 | 66 (0,5) DPA<br>51 (1,0) DMAPA<br>79 (1,0) ADP<br>26 (0,4) EHA | 340 (15) PBGG |
| 8 | 578 (3,4) I | BGL 87 (0,3) | M 3 | 55 (1,8) EOLA<br>142 (1,1) DBA | 18 (2) PEGG |

TABELLE 2

| B | Aminzahl(1) DIN 53216 | prim. Hydroxyl-gruppen(2) | Neutralisation mMol (FH)(3) | pH-Wert(4) |
|---|---|---|---|---|
| 1 (V) | 80 | 94 | 55 | 6,4 |
| 2 | 76 | 89 | 35 | 6,5 |
| 3 | 72 | 85 | 20 | 6,9 |
| 4 (V) | 78 | 92 | 45 | 6,5 |
| 5 | 74 | 87 | 25 | 6,8 |
| 6 | 70 | 82 | 15 | 7,0 |
| 7 | 64 | 25 | 27 | 6,6 |
| 8 | 125 | 115 | 48 | 5,8 |

(1) bezogen auf nichtflüchtigen Harzanteil
(2) ausgedrückt als Hydroxylzahl in mg KOH/g (berechnet); sek. Hydroxylgruppen sind nicht berücksichtigt
(3) maximal erforderlich Säuremenge zur Erzielung einer stabilen wäßrigen Lösung (15% Festkörper/1 Woche Zimmertemp. ohne Phasentrennung)
(4) pH-Wert der mit einer Säuremenge nach (3) hergestellten Lösung, gemessen nach 5 Stunden

Prüfung der Produkte gemäß Beispiel 1—8 in kathodisch abscheidbaren Lacken

Die erfindungsgemäß hergestellten Produkte werden in den in der Tabelle 3 angegebenen Verhältnissen mit einer Vernetzungskomponente und einem Katalysator bei 50°C homogen vermischt. Aus diesen Bindemittellösungen werden entsprechend der Formulierung

100 Tle Bindemittel (Festharz)
18 Tle Titandioxid
12 Tle Aluminiumsilikatpigment
0,6 Tle Farbruß

in üblicher Weise Farbpasten hergestellt, welche nach Protonisierung mit der in der Tabelle 2 angegebenen Säuremenge mit deionisiertem Wasser auf einen Festkörpergehalt von 18% verdünnt werden.

Die Abscheidung erfolgt auf zinkphosphatierten Stahlblenchen. Die Abscheidungsbegingungen, die Härtungsbedingungen und die Prüfergebnisse sind in der Tabelle 3 zusammengefaßt.

Als Vernetzungskomponenten wurden folgende Produkte eingesetzt

HK 1: Beispiel 3 der DE—A1—33 15 469
HK 2: Beispiel 3 der EP—A1—01 31 127
HK 3: Beispiel 2a der EU—B—0 012 463
HK 4: Komponente B2 der AT—PS—372 099

Als Katalysatoren für die Umesterungshärtung wurden die Metalle Blei, Cobalt und Mangan in Form der Octoate eingesetzt, wobei die in der Tabelle 3 angegebenen Mengen auf 100 Tle Bindemittel-Festharz bezogen sind.

TABELLE 3

| Bindemittelzusammensetzung | | | Beschichtung und Vernetzung | | | Prüfergebnisse | | |
|---|---|---|---|---|---|---|---|---|
| Produkt aus Beispiel in Tlen | Härterkomp. Tle | Katalysator | Abscheidung sec/Volt | Härtung min/°C | Schichtstärke µm | Härte nach KONIG (DIN 53157) sec | Tiefung nach ERICHSEN DIN 53156 mm | Salzsprühtest ASTM-B-117.64, h[x)] |
| 70 beisp. 1 | 30 HK 1 | 1 Pb | 150/330 | 30/160 | 27 | 180 | 6,8 | über 1000 |
| | | | | 30/150 | | 172 | 6,6 | |
| 70 Beisp. 2 | 30 HK 1 | 1 Pb | 150/330 | 30/160 | 26 | 175 | 7,0 | über 1000 |
| | | | | 30/150 | | 170 | 6,7 | |
| 70 Beisp. 3 | 30 HK 1 | 1 Pb | 150/330 | 30/160 | 25 | 170 | 5,8 | über 1000 |
| | | | | 30/150 | | 162 | 5,5 | |
| 75 Beisp. 4 | 25 HK 2 | 0,2 Co | 150/300 | 20/180 | 24 | 185 | 5,4 | 920 |
| | | | | 30/160 | | 168 | 5,2 | |
| 75 Beisp. 5 | 25 HK 2 | 0,2 Co | 150/300 | 20/180 | 24 | 182 | 5,7 | 920 |
| | | | | 30/160 | | 166 | 5,0 | |
| 75 Beisp. 6 | 25 HK 2 | 0,2 Co | 150/300 | 20/180 | 22 | 175 | 5,8 | 920 |
| | | | | 30/160 | | 159 | 5,2 | |
| 72 Beisp. 7 | 28 HK 3 | 0,8 Pb | 120/250 | 20/180 | 26 | 173 | 6,9 | 840 |
| 78 Beisp. 8 | 22 HK 4 | 0,3 Mn | 120/380 | 30/180 | 33 | 188 | 5,1 | 970 |

x) 2 mm Ablösung

**Patentansprüche**

1. Verfahren zur Herstellung von nach Protonierung wasserverdünnbaren, kathodisch abscheidbaren Bindemitteln auf der Basis von polyoxyalkylenmodifizierten Epoxidharz-Amin-Addukten, dadurch gekennzeichnet, daß man Aminaddukte von Polyglycidylethern von Polyphenolen, wobei die Addukte eine ausschließlich von tertiären Aminogruppen stammende Aminzahl zwischen 30 und 130 mg KOH/g, primäre Hydroxylgruppen in einer Menge entsprechend einer Hydroxylzahl von 20 bis 200 mg KOH/g und ein mittleres Molekulargewicht von 1000 bis 20.000 aufweisen, bei 60 bis 150°C mit 0,5 bis 20 Gew.-% Polyoxy[($C_2$—$C_5$)alkylen]glycidylethern, deren anteilige Polyglykole ein Molekulargewicht zwischen 300 und 850 haben, bis zu einem Epoxidwert von praktisch 0 umsetzt.

2. Verfahren nach Anspruch 1, dadurch gekennzeichnet, daß man als Polyglycidylether von Polyphenolen Produkte mit einem Epoxidäquivalentgewicht von 170 bis 1000 einsetzt.

3. Verfahren nach den Ansprüchen 1 und 2, dadurch gekennzeichnet, daß man als Polyglycidylether von Polyphenolen solche des Bisphenol A und/oder von Phenolnovolaken einsetzt.

4. Verfahren nach den Ansprüchen 2 und 3, dadurch gekennzeichnet, daß man die Polyglycidylether vor der Umsetzung mit den Aminen partiell, jedoch nicht mehr als zu 50% (bezogen auf die Glycidylgruppen) mit anderen epoxidreaktiven Verbindungen defunktionalisiert.

5. Verfahren nach Anspruch 4, dadurch gekennzeichnet, daß man zur partiellen Defunktionalisierung primäre Hydroxylgruppen und Carboxylgruppen aufweisende Polyester- oder Alkydharze einsetzt.

**Revendications**

1. Procédé de préparation de liants déposables à la cathode, diluables à l'eau après protonation, à base de produits d'addition de résines époxy et d'amines modifiés par des polyoxyalkylènes, caractérisé en ce que l'on fait réagir des produits d'addition d'amines de polyglycidyléthers de polyphénols entre 60 et 150°C avec 0,5 à 20% en poids de polyoxy[alkylène($C_2$—$C_5$)]glycidyléthers dont les polyglycols mis en commun ont un poids moléculaire compris entre 300 et 850, jusqu'à un indice d'époxyde pratiquement égal à zéro, les produits d'addition présentant un indice d'amine provenant exclusivement de groupes amino tertiaires compris entre 30 et 130 mg de KOH/g, des groupes hydroxyle primaires en une quantité correspondant à un indice d'hydroxyle de 20 à 200 mg de KOH/g et un poids moléculaire moyen de 1000 à 20000.

2. Procédé selon la revendication 1, caractérisé en ce que l'on utilise comme polyglycidyléthers de polyphénols des produits qui ont un poids d'équivalent d'époxyde de 170 à 1000.

3. Procédé selon les revendications 1 et 2, caractérisé en ce que l'on utilise comme polyglycidyléthers de polyphénols des polyglycidyléthers du bisphénol A et/ou de novolaques du phénol.

4. Procédé selon les revendications 2 et 3, caractérisé en ce que l'on défonctionnalise les polyglycidyléthers partiellement mais pas à plus de 50% (par rapport aux groupes glycidyle) avec d'autres composés réactifs avec les époxydes, avant la réaction avec les amines.

5. Procédé selon la revendication 4, caractérisé en ce que l'on utilise pour la défonctionnalisation partielle des résines polyesters ou alkyde présentant des groupes hydroxyle primaires et des groupes carboxyle.

**Claims**

1. Process for the preparation of cathodically depositable binders, water-thinnable after protonization, based on polyoxyalkylene-modified epoxy resin-amine adducts, characterized in that amine adducts of polyglycidyl ethers of polyphenols are reacted at 60 to 150°C with 0.5 to 20% by weight of polyoxy-($C_2$—$C_5$)alkylene glycidyl ethers whose constituent polyglycols have a molecular weight between 300 and 850, until an epoxide value of virtually 0 is attained, the said amine adducts having an amine value between 30 and 130 mg of KOH/g derived exclusively from tertiary amino groups, primary hydroxyl groups in an amount corresponding to a hydroxyl value of 20 to 200 mg of KOH/g and having an average molecular weight of 1000 to 20,000.

2. Process according to Claim 1, characterized in that products having an epoxide equivalent weight of 170 to 1000 are used as polyglycidyl ethers of polyphenols.

3. Process according to Claims 1 and 2, characterized in that polyglycidyl ethers of bisphenol A and/or phenolic novolaks are used as the polyglycidyl ethers of polyphenols.

4. Process according to Claims 2 and 3, characterized in that the polyglycidyl ethers are partially, but not to a greater degree than 50% (based on the glycidyl groups), defunctionalized by other compounds reactive toward epoxides prior to their reacting with the amines.

5. Process according to Claim 4, characterized in that polyester resins or alkyd resins comprising primary hydroxyl groups and carboxyl groups are used for the partial defunctionalization.